# FASCICULE DE BREVET EUROPEEN

(11) **EP 3 985 813 B1**
(45) Date de publication et mention de la délivrance du brevet: **16.07.2025**
(21) Numéro de dépôt: 21202510.0
(22) Date de dépôt: 13.10.2021
(51) Int. Cl.: H01T 13/54, F02P 15/08, H01T 13/22, H01T 13/32, H01T 13/46, F02P 3/02, F02P 15/02

(54) **BOUGIE D'ALLUMAGE POUR MOTEUR À ALLUMAGE COMMANDÉ**
ZÜNDKERZE FÜR EINEN FREMDGEZÜNDETEN MOTOR
SPARK PLUG FOR CONTROLLED IGNITION MOTOR

(30) Priorité: 13.10.2020 FR 2010457
(43) Date de publication de la demande: 20.04.2022
(73) Titulaire: NEW H POWERTRAIN HOLDING, S.L.U., 47008 Valladolid (ES)
(72) Inventeur: Besancon, Thomas, 92430 Bourg la Reine (FR); LAURENT, Jean-Marc, 92240 MALAKOFF (FR)
(74) Mandataire: Renault Group

(56) Documents cités:
- EP-A1- 0 669 454
- CN-A- 109 555 593
- GB-A- 2 275 505
- JP-A- 2007 064 101
- JP-A- 2011 122 515
- US-A- 1 579 916
- US-A1- 2007 169 737
- US-B2- 10 116 122

## Description

L'invention concerne une bougie d'allumage pour moteur à allumage commandé. L'invention porte aussi sur un système d'allumage commandé comprenant une telle bougie d'allumage. L'invention porte aussi sur une culasse de moteur à allumage commandé comprenant une telle bougie d'allumage. L'invention porte aussi sur un moteur à allumage commandé comprenant une telle culasse. L'invention porte aussi sur un véhicule comprenant un tel moteur. L'invention porte également sur un procédé de fonctionnement d'un moteur à allumage commandé comprenant une telle culasse.

L'amélioration du rendement des moteurs thermiques à allumage commandé est un des enjeux de l'évolution de l'industrie automobile. En particulier, l'augmentation du rapport volumétrique des moteurs à allumage commandé constitue un axe de progrès dans ce domaine.

Les solutions techniques envisagées jusqu'ici pour augmenter le rapport volumétrique d'un moteur thermique se heurtent à des difficultés de mise en œuvre. En effet, une augmentation du rapport volumétrique peut induire des phénomènes d'autoallumage du carburant, autrement nommés cliquetis, qui peuvent endommager le moteur.

L'utilisation d'une bougie à préchambre permet de réduire le phénomène de cliquetis. Ce type de bougie, utilisé sur des moteurs stationnaires au gaz et sur des moteurs de Formule 1, permet d'obtenir une combustion du carburant plus rapide qu'avec une bougie standard et ainsi de repousser l'apparition de cliquetis, à volume égal de chambre de combustion. La bougie à préchambre est cependant moins performante qu'une bougie standard dans certaines conditions d'usage d'un moteur de véhicule dit particulier, telles que le démarrage du moteur à froid ou les phases de chauffe du post-traitement.

La publication US 2019/0323415-A1 propose un agencement dans une culasse de moteur thermique d'une première bougie avec une préchambre associée à une deuxième bougie d'allumage disposée latéralement.

Un tel agencement nécessite deux perçages différents dans la culasse pour l'insertion des deux bougies ainsi qu'un bon positionnement des bougies entre elles, ce qui augmente l'encombrement global de la culasse et du moteur thermique.

Le document JP 2007 064101 A présente un agencement similaire à l'invention présente.

Le but de l'invention est de fournir une bougie d'allumage pour moteur à allumage commandé remédiant aux inconvénients ci-dessus et améliorant les bougies d'allumage pour moteur à allumage commandé connus de l'art antérieur. En particulier, l'invention porte sur une bougie d'allumage pour moteur à allumage commandé qui permette d'augmenter le rapport volumétrique du moteur tout en limitant le phénomène de cliquetis, et qui soit adapté aux conditions d'usage d'un moteur de véhicule particulier en maitrisant l'encombrement généré par l'agencement de la bougie.

A cet effet, l'invention porte sur une bougie d'allumage pour moteur à allumage commandé telle que définie à la revendication 1.

Selon l'invention, les première et deuxième électrodes sont électriquement isolées l'une par rapport à l'autre et les deux espaces inter-électrodes permettent de commander indépendamment une étincelle vers l'un ou l'autre ou l'ensemble des deux espaces inter-électrodes.

Selon l'invention, la bougie comprend une préchambre disposée de sorte que le premier espace inter-électrodes se situe dans la préchambre et le deuxième espace inter-électrodes se situe en dehors de la préchambre.

Dans un mode de réalisation, la bougie comprend :
- une rondelle soudée au culot de la bougie d'allumage, ladite rondelle présentant deux ouvertures, une première ouverture étant aménagée pour laisser passer une première électrode et une deuxième ouverture étant aménagée pour laisser passer une deuxième électrode, et
- une capsule, soudée à la rondelle et coiffant la première ouverture aménagée sur la rondelle, ladite capsule présentant au moins deux orifices permettant à un combustible de pénétrer dans la préchambre de combustion.

Dans un mode de réalisation, les troisième et quatrième électrodes sont portées par la capsule.

Dans un mode de réalisation, la rondelle et la capsule font partie du culot.

Selon l'invention, la bougie comprend un connecteur à deux fiches destiné à recevoir un capuchon permettant de commander individuellement chacune des première et deuxième électrodes.

Dans un mode de réalisation, les première et deuxième électrodes sont rectilignes et elles s'insèrent respectivement dans deux logements parallèles réalisés dans une céramique d'isolation.

L'invention porte aussi sur une culasse de moteur à allumage commandé comprenant une bougie d'allumage selon l'invention :
- la bougie d'allumage s'insérant dans un emplacement de la culasse prévu pour une bougie d'allumage standard, et
- les au moins deux orifices de la capsule de préchambre de la bougie permettant à un combustible contenu dans la culasse pénétrer dans la préchambre,
- le deuxième espace inter-électrodes de la bougie d'allumage se situant dans la culasse.

L'invention porte également sur un système d'allumage commandé comprenant une unité de commande d'allumage et une bougie d'allumage selon l'invention.

L'invention porte en outre sur un moteur à allumage commandé comprenant une culasse selon l'invention.

L'invention porte de plus sur un véhicule automobile comprenant un moteur à allumage commandé selon l'invention.

L'invention porte sur un procédé de fonctionnement d'un moteur à allumage commandé selon l'invention ou d'un système d'allumage commandé selon l'invention, comprenant :
- une étape de production d'une étincelle par cycle moteur et par bougie dans un premier espace inter-électrodes, et/ou
- une étape de production d'une étincelle par cycle moteur et par bougie dans un deuxième espace inter-électrodes, et/ou
- une étape de production de deux étincelles par cycle moteur et par bougie respectivement dans les premier et deuxième espaces inter-électrodes, ces deux étincelles pouvant être décalées dans le temps l'une par rapport à l'autre.

Ces objets, caractéristiques et avantages de la présente invention seront exposés en détail dans la description suivante d'un mode de réalisation particulier fait à titre non-limitatif en relation avec les figures jointes parmi lesquelles :
[Fig. 1] La figure 1 représente un mode de réalisation d'un véhicule selon l'invention, où une bougie est représentée en coupe longitudinale.
[Fig. 2] La figure 2 représente une vue de dessous d'un mode de réalisation de la bougie d'allumage selon l'invention.
[Fig 3] La figure 3 présente une vue en perspective d'un mode de réalisation d'une préchambre de combustion selon l'invention.

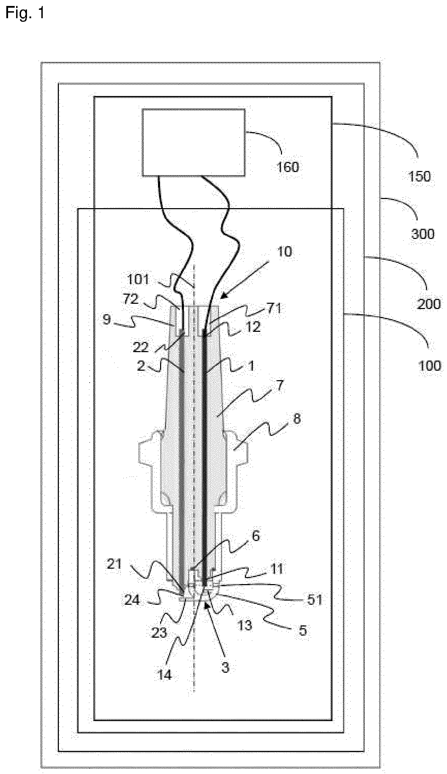

Un mode de réalisation d'un véhicule automobile 300 selon l'invention est décrit ci-après en référence à la figure 1. Le véhicule automobile 300 est un véhicule automobile de n'importe quel type, notamment un véhicule de tourisme ou un véhicule utilitaire.

Le véhicule automobile 300 est équipé d'un moteur à allumage commandé 200 selon l'invention. Le moteur à allumage commandé est de tout type.

Le moteur à allumage commandé 200 comprend un système d'allumage 150. Le système d'allumage comprend une unité de commande d'allumage 160 et une bougie d'allumage 10 selon l'invention.

Le moteur à allumage commandé 200 comprend une culasse 100 selon l'invention. La culasse 100 comprend une bougie d'allumage 10 selon l'invention.

Un mode de réalisation d'une bougie d'allumage 10 pour moteur à allumage commandé est décrite ci-après en référence aux figures 1 à 3.

La bougie d'allumage 10 comprend un culot 8 dans lequel est insérée une céramique d'isolation 7. Le culot 8 et la céramique 7 ont un axe longitudinal commun 101, qui est également l'axe longitudinal de la bougie d'allumage 10. Le culot 8 recouvre la céramique 7 sensiblement sur une première moitié de la longueur de la bougie d'allumage 10, dite partie ou moitié inférieure de la bougie d'allumage 10. Sur sensiblement l'autre moitié de la longueur de la bougie d'allumage 10, dite partie ou moitié supérieure de la bougie d'allumage 10, la céramique d'isolation est apparente. Le culot est de préférence fileté extérieurement pour permettre sa fixation par vissage dans un trou taraudé de la culasse.

La céramique d'isolation 7 présente deux évidements rectilignes parallèles à l'axe longitudinal 101 de la bougie d'allumage 10.

La bougie d'allumage 10 comprend également une première et une deuxième électrode 1, 2. Elles sont par exemple rectilignes et s'insèrent respectivement dans les deux évidements rectilignes de la céramique d'isolation 7. Les première et deuxième électrodes 1, 2 traversent donc longitudinalement la céramique d'isolation 7.

Dans la moitié supérieure de la bougie d'allumage 10, la céramique 7 présente deux évidements 71, 72 qui laissent dépasser l'extrémité supérieure 12, 22 des première et deuxième électrodes 1, 2. Les évidements 71, 72 constituent ainsi un connecteur à deux fiches 9 destiné à recevoir un capuchon à deux fiches permettant de constituer une connexion galvanique des extrémités supérieures 12, 22 des électrodes à l'unité de commande d'allumage 160, afin de commander l'une ou l'autre ou l'ensemble des première et deuxième électrodes 1, 2.

Dans la moitié inférieure de la bougie d'allumage 10, les extrémités inférieures 11, 21 des première et deuxième électrodes 1, 2 dépassent de la céramique.

L'extrémité inférieure de la bougie d'allumage 10 comprend également une troisième et une quatrième électrode 13, 23, qui définissent respectivement
- un premier espace inter-électrodes 14 situé entre la troisième électrode 13 et l'extrémité inférieure 11 de la première électrode 1, et
- un deuxième espace inter-électrodes 24 situé entre la quatrième électrode 23 et l'extrémité inférieure 21 de la deuxième électrode 2.

Par espace inter-électrodes on désigne un interstice séparant deux électrodes n'étant pas en contact, cet interstice étant destiné à être le siège d'étincelles entre les deux électrodes.

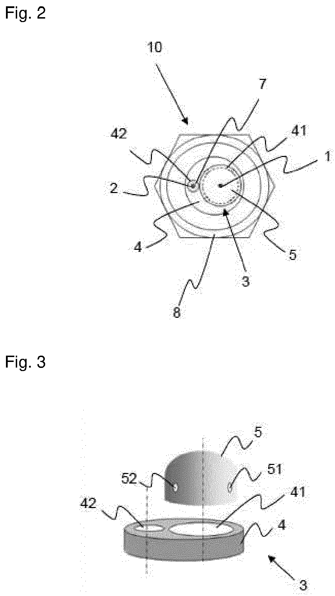

A l'extrémité inférieure de la première électrode 1, une préchambre de combustion 3 (plus spécifiquement représentée dans la figure 3) peut être à l'aide d'une rondelle de préchambre 4 et d'une capsule de préchambre 5 soudée sur la rondelle 4.

La rondelle 4 est soudée sur l'extrémité inférieure du culot 8. Elle présente deux ouvertures 41, 42 qui permettent de laisser passer respectivement les extrémités inférieures 11, 21 des première et deuxième électrodes 1, 2, ainsi que la céramique d'isolation qui enveloppe une portion de ces extrémités inférieures 11, 21.

Un joint 6 peut être placé entre la rondelle 4 et un épaulement réalisé dans la céramique d'isolation 7 autour de l'extrémité inférieure 11 de la première électrode 1.

Une capsule de préchambre 5 est avantageusement soudée sur la rondelle 4 en regard de l'ouverture 41 réalisée dans la rondelle 4 pour laisser passer l'extrémité inférieure 11 de la première électrode 1. La capsule de préchambre 5 délimite ainsi un volume de préchambre autour de l'extrémité inférieure 11 de la première électrode 1. Des orifices 51, 52 sont disposés sur la capsule de préchambre 5 afin de permettre au volume de préchambre de communiquer avec l'extérieur de la préchambre.

Selon un autre mode de réalisation ladite rondelle 4 et la capsule 5 font partie du culot 8, notamment la rondelle 4 et la capsule 5 sont issues d'une même pièce avec le culot 8.

La troisième et la quatrième électrode 13, 23 sont respectivement disposées en regard et à distance de chacune des extrémités inférieures 11, 21 des première et deuxième électrodes 1, 2. Dans la suite du document, les troisième et quatrième électrodes sont nommées électrodes de masse.

De manière préférentielle, les troisième et quatrième électrodes de masse sont portées par la capsule 5 et donc par le culot 8. Cet agencement permet une compacité optimale de la bougie.

L'électrode de masse 13 associée à la première électrode 1 se situe à l'intérieur de la préchambre de combustion.

Dans le mode de réalisation représenté dans la figure 1, l'électrode de masse 23 associée à la deuxième électrode 2 se situe sur la face externe de la capsule de préchambre 5, en regard de l'extrémité inférieure 21 de la deuxième électrode 2. Dans ce mode de réalisation, la première électrode 1 débouchant sur la préchambre 3 est légèrement plus courte que la deuxième électrode 2.

Les deux électrodes de masse sont reliées directement ou indirectement au culot 8 de la bougie d'allumage 10. Dans le mode de réalisation présenté, les deux électrodes de masse 13, 23 sont fixées à la capsule 5 qui est reliée au culot 8 par l'intermédiaire de la rondelle 4.

Un espace dit espace inter-électrodes 14, 24 sépare chacune des extrémités inférieures 11, 21 des première et deuxième électrodes 1, 2, de l'électrode de masse qui lui est associée 13, 23.

La bougie d'allumage 10 permet ainsi de commander indépendamment ou simultanément les première et deuxième électrodes 1, 2, isolées électriquement l'une de l'autre, entrainant un allumage du combustible indépendant ou simultané à partir de deux espaces distincts, la préchambre de combustion 3 et/ou la chambre de combustion.

L'allumage du combustible à partir de la préchambre de combustion 3 s'effectue en appliquant une haute tension entre l'extrémité supérieure 12 de l'électrode 1 via le connecteur 9 et la masse. Un arc électrique se forme alors dans l'espace inter-électrodes 14 situé dans la préchambre de combustion. La préchambre étant remplie d'un mélange inflammable, la survenue de cette étincelle provoque l'inflammation du combustible.

L'allumage du combustible directement dans la chambre de combustion délimitée par la culasse s'effectue en appliquant une haute tension entre l'extrémité supérieure 22 de l'électrode 2 via le connecteur 9 et la masse. Un arc électrique se forme alors dans l'espace inter-électrodes 24 situé dans la chambre de combustion, créant l'inflammation du combustible à partir de cette étincelle.

Un mode d'exécution d'un procédé de fonctionnement d'un moteur à allumage commandé ou d'un système d'allumage commandé selon l'invention est décrit ci-après. Le procédé comprend :
- un premier mode de fonctionnement avec production d'une étincelle par bougie et par cycle moteur dans un premier espace inter-électrodes 14, 24, et/ou
- un deuxième mode de fonctionnement avec production d'une étincelle par bougie et par cycle moteur dans un deuxième espace inter-électrodes 14, 24, et/ou
- un troisième mode de fonctionnement avec production de deux étincelles par bougie et par cycle moteur respectivement dans les premier et deuxième espaces inter-électrodes14, 24, ces deux étincelles pouvant être décalées dans le temps l'une par rapport à l'autre.

L'allumage du combustible peut donc être commandé de façon sélective à partir de l'espace le plus adéquat, préchambre de combustion 3 ou chambre de combustion, selon les conditions d'utilisation du moteur.

Dans des conditions courantes d'utilisation du moteur ne risquant pas d'altérer la préchambre de combustion, la commande de l'allumage pourra être réalisée à partir de l'électrode 1 débouchant dans la préchambre de combustion 3. La bougie d'allumage 10 présentera les mêmes avantages qu'une bougie à préchambre. En particulier La bougie d'allumage 10 permettra d'augmenter le rendement volumétrique du moteur tout en limitant l'apparition de cliquetis.

Lors de phases spécifiques d'utilisation du moteur - telles qu'un démarrage à froid du moteur, ou une phase de chauffe du post-traitement -, la commande de l'allumage pourra être réalisée à partir de l'électrode 2 débouchant dans la chambre de combustion. La bougie d'allumage 10 permettra ainsi de bénéficier de meilleures performances dans des cas d'utilisation où une bougie à préchambre s'avèrerait peu performante.

Dans le mode de fonctionnement où on produit deux étincelles par bougie et par cycle moteur, les deux étincelles peuvent être décalées dans le temps d'une durée correspondant à un degré de rotation donné de vilebrequin du moteur.

Ainsi, en combinant le fonctionnement d'une bougie à préchambre et d'une bougie standard, La bougie d'allumage 10 permet d'augmenter le rendement volumétrique d'un moteur thermique.

De plus, la bougie d'allumage 10 a été réalisée en tenant compte des contraintes liées à son intégration dans une culasse et une chambre de combustion d'un moteur. En particulier, la bougie d'allumage 10 a été réalisée de telle sorte qu'elle puisse s'intégrer dans un alésage prévu pour recevoir une bougie standard.

## Revendications

1. Bougie d'allumage (10) pour moteur à allumage commandé comprenant :
- une première électrode (1),
- une deuxième électrode (2),
- une troisième électrode (13),
- une quatrième électrode (23),
- un premier espace inter-électrodes (14) situé entre la première électrode (1) et la troisième électrode (13),
- un deuxième espace inter-électrodes (24) situé entre la deuxième électrode (2) et la quatrième électrode (23),
- un culot (8), notamment en partie inférieure de la bougie,
les troisième et quatrième électrodes (13, 23) faisant partie du culot (8), et
- une préchambre (3) disposée de sorte que le premier espace inter-électrodes (14) se situe dans la préchambre (3) et le deuxième espace inter-électrodes (24) se situe en dehors de la préchambre,
**caractérisée en ce que**
les première et deuxième électrodes sont électriquement isolées l'une par rapport à l'autre et les premier et deuxième espaces inter-électrodes permettent de commander indépendamment une étincelle vers l'un ou l'autre ou l'ensemble des premier et deuxième espaces inter-électrodes, et **en ce que** la bougie comprend un connecteur à deux fiches (9) destiné à recevoir un capuchon permettant de commander individuellement chacune des première et deuxième électrodes (1, 2).

2. Bougie d'allumage (10) pour moteur à allumage commandé selon la revendication précédente, **caractérisée en ce que** la bougie (10) comprend :
- une rondelle (4) soudée au culot (8) de la bougie d'allumage, ladite rondelle présentant deux ouvertures, une première ouverture (41) étant aménagée pour laisser passer une première électrode (1) et une deuxième ouverture (42) étant aménagée pour laisser passer une deuxième électrode (2), et
- une capsule (5), soudée à la rondelle (4) et coiffant la première ouverture (41) aménagée sur la rondelle (4), ladite capsule (5) présentant au moins deux orifices (51, 52) permettant à un combustible de pénétrer dans la préchambre de combustion (3).

3. Bougie d'allumage (10) pour moteur à allumage commandé selon la revendication 2, **caractérisée en ce que** les troisième et quatrième électrodes sont portées par la capsule (5).

4. Bougie d'allumage (10) pour moteur à allumage commandé selon les revendications 2 ou 3, **caractérisée en ce que** la rondelle (4) et la capsule (5) font partie du culot (8).

5. Bougie d'allumage (10) pour moteur à allumage commandé selon l'une des revendications précédentes, **caractérisée en ce que** les première et deuxième électrodes (1, 2) sont rectilignes et **en ce qu'**elles s'insèrent respectivement dans deux logements parallèles réalisés dans une céramique d'isolation (7).

6. Culasse de moteur (100) à allumage commandé comprenant une bougie d'allumage (10) selon l'une des revendications précédentes, **caractérisée en ce que** :
- ladite bougie d'allumage (10) s'insère dans un emplacement de la culasse prévu pour une bougie d'allumage standard, et
- les au moins deux orifices (51, 52) de la capsule de préchambre de ladite bougie (10) permettent à un combustible contenu dans la culasse pénétrer dans la préchambre (3), et
- le deuxième espace inter-électrodes (24) de ladite bougie d'allumage (10) se situe dans la culasse.

7. Système d'allumage commandé (150) comprenant une unité de commande d'allumage (160) et une bougie d'allumage (10) selon l'une des revendications 1 à 5.

8. Moteur à allumage commandé (200) comprenant une culasse selon la revendication 6.

9. Véhicule automobile (300) comprenant un moteur à allumage commandé selon la revendication précédente.

10. Procédé de fonctionnement d'un moteur à allumage commandé selon la revendication 8 ou d'un système d'allumage commandé selon la revendication 7, comprenant :
- une étape de production d'une étincelle par cycle moteur et par bougie dans un premier espace inter-électrodes, et/ou
- une étape de production d'une étincelle par cycle moteur et par bougie dans un deuxième espace inter-électrodes, et/ou
- une étape de production de deux étincelles par cycle moteur et par bougie respectivement dans les premier et deuxième espaces inter-électrodes, ces deux étincelles pouvant être décalées dans le temps l'une par rapport à l'autre.

## Patentansprüche

1. Zündkerze (10) für einen Ottomotor, umfassend:
- eine erste Elektrode (1),
- eine zweite Elektrode (2),
- eine dritte Elektrode (13),
- eine vierte Elektrode (23),
- einen ersten Elektrodenzwischenraum (14), der sich zwischen der ersten Elektrode (1) und der dritten Elektrode (13) befindet,
- einen zweiten Elektrodenzwischenraum (24), der sich zwischen der zweiten Elektrode (2) und der vierten Elektrode (23) befindet,
- einen Sockel (8), insbesondere im unteren Teil der Zündkerze, wobei die dritte und die vierte Elektrode (13, 23) einen Teil des Sockels (8) bilden, und
- eine Vorkammer (3), die so angeordnet ist, dass sich der erste Elektrodenzwischenraum (14) in der Vorkammer (3) befindet und sich der zweite Elektrodenzwischenraum (24) außerhalb der Vorkammer befindet,
**dadurch gekennzeichnet, dass** die erste und die zweite Elektrode elektrisch voneinander isoliert sind und der erste und der zweite Elektrodenzwischenraum das unabhängige Steuern eines Funkens zu dem einem oder dem anderen oder beiden von dem ersten und dem zweiten Elektrodenzwischenraum ermöglichen und **dadurch, dass** die Zündkerze einen zweipoligen Anschluss (9) umfasst, der zur Aufnahme einer Kappe vorgesehen ist, die das individuelle Steuern jeder der ersten und der zweiten Elektrode (1, 2) ermöglicht.

2. Zündkerze (10) für einen Ottomotor nach dem vorstehenden Anspruch, **dadurch gekennzeichnet, dass** die Zündkerze (10) umfasst:
- eine Unterlegscheibe (4), die an den Sockel (8) der Zündkerze geschweißt ist, wobei die Unterlegscheibe zwei Öffnungen aufweist, wobei eine erste Öffnung (41) so eingerichtet ist, dass eine erste Elektrode (1) hindurchgeführt werden kann, und eine zweite Öffnung (42) so eingerichtet ist, dass eine zweite Elektrode (2) hindurchgeführt werden kann, und
- eine Kapsel (5), die an die Unterlegscheibe (4) geschweißt ist und die erste Öffnung (41) abdeckt, die auf der Unterlegscheibe (4) ausgebildet ist, wobei die Kapsel (5) mindestens zwei Löcher (51, 52) aufweist, durch die ein Kraftstoff in die Vorbrennkammer (3) eindringen kann.

3. Zündkerze (10) für einen Ottomotor nach Anspruch 2,
**dadurch gekennzeichnet, dass** die dritte und die vierte Elektrode von der Kapsel (5) getragen werden.

4. Zündkerze (10) für einen Ottomotor nach Anspruch 2 oder 3,
**dadurch gekennzeichnet, dass** die Unterlegscheibe (4) und die Kapsel (5) Teil des Sockels (8) sind.

5. Zündkerze (10) für einen Ottomotor nach einem der vorstehenden Ansprüche, **dadurch gekennzeichnet, dass** die erste und die zweite Elektrode (1, 2) geradlinig sind und **dadurch, dass** sie sich jeweils in zwei parallele Gehäuse aus isolierender Keramik (7) einfügen.

6. Zylinderkopf (100) eines Ottomotors, umfassend eine Zündkerze (10) nach einem der vorstehenden Ansprüche, **dadurch gekennzeichnet, dass**:
- sich die Zündkerze (10) in eine für eine Standardzündkerze vorgesehene Stelle im Zylinderkopf einfügt, und
- die mindestens zwei Löcher (51, 52) der Vorkammerkapsel der Zündkerze (10) ermöglichen, dass ein im Zylinderkopf enthaltener Kraftstoff in die Vorkammer (3) eindringt, und
- sich der zweite Elektrodenzwischenraum (24) der Zündkerze (10) im Zylinderkopf befindet.

7. Fremdzündsystem (150), umfassend eine Zündsteuereinheit (160) und eine Zündkerze (10) nach einem der Ansprüche 1 bis 5.

8. Ottomotor (200), umfassend einen Zylinderkopf nach Anspruch 6.

9. Kraftfahrzeug (300), umfassend einen Ottomotor nach dem vorstehenden Anspruch.

10. Verfahren zum Betreiben eines Ottomotors nach Anspruch 8 oder eines Fremdzündsystems nach Anspruch 7, umfassend:
- einen Schritt zum Erzeugen eines Funkens pro Motorzyklus und pro Zündkerze in einem ersten Elektrodenzwischenraum, und/oder
- einen Schritt zum Erzeugen eines Funkens pro Motorzyklus und pro Zündkerze in einem zweiten Elektrodenzwischenraum, und/oder
- einen Schritt zum Erzeugen von zwei Funken pro Motorzyklus und pro Zündkerze jeweils in dem ersten und dem zweiten Elektrodenzwischenraum, wobei diese beiden Funken zeitlich voneinander versetzt sein können.

## Claims

1. Spark plug (10) for a spark-ignition engine comprising:
- a first electrode (1),
- a second electrode (2),
- a third electrode (13),
- a fourth electrode (23),
- a first inter-electrode gap (14) located between the first electrode (1) and the third electrode (13),
- a second inter-electrode gap (24) located between the second electrode (2) and the fourth electrode (23),
- a shell (8), in particular at the bottom of the plug, the third and fourth electrodes (13, 23) forming part of the shell (8), and
- a pre-chamber (3) arranged so that the first inter-electrode gap (14) is located within the pre-chamber (3) and the second inter-electrode gap (24) is located outside the pre-chamber,
**characterized in that**
the first and second electrodes are electrically insulated from each other and the first and second inter-electrode gaps enable a spark to be controlled independently to either or both of the first and second inter-electrode gaps,
and **in that** the plug comprises a two-pin connector (9) for receiving a cap enabling each of the first and second electrodes (1, 2) to be controlled individually.

2. Spark plug (10) for a spark-ignition engine according to the preceding claim, **characterized in that** the plug (10) comprises:
- a washer (4) which is welded to the shell (8) of the spark plug, said washer having two openings, a first opening (41) being provided to let through a first electrode (1) and a second opening (42) being provided to let through a second electrode (2), and
- a cap (5), which is welded to the washer (4) and covering the first opening (41) provided on the washer (4), said cap (5) having at least two orifices (51, 52) allowing fuel to enter the combustion pre-chamber (3).

3. Spark plug (10) for a spark-ignition engine according to claim 2,
**characterized in that** the third and fourth electrodes are supported by the cap (5).

4. Spark plug (10) for a spark-ignition engine according to claims 2 or 3,
**characterized in that** the washer (4) and the cap (5) form part of the shell (8).

5. Spark plug (10) for a spark-ignition engine according to one of the preceding claims, **characterized in that** the first and second electrodes (1, 2) are straight and **in that** they fit respectively into two parallel housings made in an insulating ceramic (7).

6. Cylinder head (100) of a spark-ignition engine comprising a spark plug (10) according to one of the preceding claims, **characterized in that:**
- said spark plug (10) fits into a cylinder head location intended for a standard spark plug, and
- the at least two orifices (51, 52) of the pre-chamber cap of said plug (10) allow a fuel contained in the cylinder head to enter the pre-chamber (3), and
- the second inter-electrode gap (24) of said spark plug (10) is located in the cylinder head.

7. Spark-ignition system (150) comprising an ignition control unit (160) and a spark plug (10) according to one of claims 1 to 5.

8. Spark-ignition engine (200) comprising a cylinder head according to claim 6.

9. Motor vehicle (300) comprising a spark-ignition engine according to the preceding claim.

10. Method of operating a spark-ignition engine according to claim 8 or a spark-ignition system according to claim 7, comprising:
- a step of producing one spark per engine cycle and per plug in a first inter-electrode gap, and/or
- a step of producing one spark per engine cycle and per plug in a second inter-electrode gap, and/or
- a step of producing two sparks per engine cycle and per plug in the first and second inter-electrode gaps respectively, these two sparks being able to be staggered in time with respect to each other.
